# EUROPÄISCHE PATENTANMELDUNG

(11) **EP 4 496 232 A1**
(43) Veröffentlichungstag der Anmeldung: **22.01.2025**
(21) Anmeldenummer: 24182452.3
(22) Anmeldetag: 16.06.2024
(51) Int. Cl.: H04B 3/54, B60L 53/66

(54) **EINRICHTUNG ZUR KOMMUNIKATION EINES ELEKTRO- ODER HYBRIDFAHRZEUGS MIT EINER ELEKTRISCHEN LADESÄULE UND KOMMUNIKATIONSVERFAHREN**

(30) Priorität: 21.07.2023 DE 102023206929
(71) Anmelder: VOLKSWAGEN AG, 38440 Wolfsburg (DE)
(72) Erfinder: Jäckle, Nicolas, 38176 Wendeburg (DE); Menssen, Wolfgang, 38110 Braunschweig (DE); Baranski, Bernd, 22143 Hamburg (DE)

(57) **Zusammenfassung**

Die Erfindung betrifft eine Einrichtung (1) zur Kommunikation eines Elektro- oder Hybridfahrzeugs mit einer elektrischen Ladesäule (2) über mindestens eine Datenleitung (9), wobei die Einrichtung mindestens einen Sender (3) und mindestens einen Empfänger (4) aufweist, wobei der Sender (3) derart ausgebildet ist, auf n Frequenzkanälen mit einer definierten Sendeleistung zu senden, wobei der Empfänger (4) derart ausgebildet ist, Empfangsleistungen der Ladesäule (2) für die n Frequenzkanäle zu empfangen, wobei die Einrichtung eine Steuereinheit (5) aufweist, wobei die Steuereinheit (5) derart ausgebildet ist, in Abhängigkeit der empfangenen Empfangsleistungen eine Kommunikation mit der Ladesäule (2) fortzusetzen oder abzubrechen, wobei der Sender (3) derart ausgebildet ist, die Sendeleistung für die n Frequenzkanäle erhöhen zu können, wobei die Steuereinheit (5) derart ausgebildet ist, dass, wenn die Empfangsleistungen einen ersten Schwellwert unterschreiten, die Sendeleistung des Senders (3) für die n Frequenzkanäle erhöht wird und der Sender (3) erneut auf allen n Frequenzkanälen sendet und der Empfänger (4) erneut die Empfangsleistungen der Ladesäule (2) empfängt, sowie ein zugehöriges Kommunikationsverfahren.

## Beschreibung

Die Erfindung betrifft eine Einrichtung zur Kommunikation eines Elektro- oder Hybridfahrzeugs mit einer elektrischen Ladesäule und ein Kommunikationsverfahren.

Bevor der eigentliche Ladevorgang zwischen Ladesäule und Fahrzeug erfolgt, findet ein umfassender Datenaustausch statt, der beispielsweise in ISO15118 und DIN70121 genormt ist. Die ISO15118 sieht hierfür HomePlug Green PHY als Physical Layer vor. Das ist ein von HomePlug AV abgeleitetes Powerline-Communication-Verfahren (PLC).

Im Rahmen der ISO/IEC-15118-High-Level-Kommunikation ist der initiale Verbindungsaufbau zwischen Fahrzeug und Ladesäule ein essenzielles Ereignis. Sobald ein Fahrer sein Fahrzeug mit einer Ladesäule verbindet, besteht das Ziel zunächst darin, einem gesicherten AV Logical Network (AVLN) beizutreten. Jedes AVLN wird durch eine Network ID (NID) repräsentiert. Des Weiteren benötigt jeder Teilnehmer eines AVLN zur verschlüsselten Kommunikation einen zur NID passenden Network Membership Key.

Zu Beginn des Kommunikationsaufbaus sendet das Fahrzeug eine Ethernet-Broadcast-Botschaft an alle möglichen Netzteilnehmer. Alle Ladesäulen, die dieses Signal empfangen, reagieren darauf mit einer Ethernet-Unicast-Bestätigung. Weil an einer physikalischen Versorgungsleitung mehrere Ladesäulen angeschlossen sein können, ist das Protokoll dafür zuständig, die betreffende Ladesäule zu identifizieren, mit der das Fahrzeug verbunden ist. Aufgrund unerwünschter Einkopplungen können auch weitere Ladesäulen, die nicht physikalisch mit dem Fahrzeug verbunden sind, angesprochen werden. Für einen korrekten und sicheren Ablauf des Verbindungsaufbaus sorgt daher bei HomePlug Green PHY der sogenannte Signal-Level-Attenuation-Characterization-Mechanismus (SLAC). SLAC arbeitet nach der Request-Response-Methode, wobei die Anfrage stehts vom Elektrofahrzeug ausgeht. Gleichzeitig einigen sich das Fahrzeug und die Ladestation auf eine RunID, ein eindeutiges Identifikationsmerkmal, das alle nachfolgenden Botschaften derselben SLAC-Session enthalten müssen.

Der Verbindungsaufbau via SLAC durchläuft nacheinander verschiedene Stufen wie "Sounding Phase", "Attenuation Characterization Phase", "Validation Phase", "Matching Phase" sowie die Amplitude Map Exchange Phase". Anhand verschieden starker Signaldämpfungen ist das Fahrzeug mit Hilfe des SLAC-Mechanismus somit in der Lage, aus der Vielzahl antwortender Ladesäulen diejenige zu identifizieren, mit der das Fahrzeug physikalisch verbunden ist. Am Ende dieses Prozesses bilden Elektrofahrzeug und Ladesäule ein gemeinsames AVLN, über das die höheren Protokollschichten ihre Information verschlüsselt austauschen.

Die Attenuation Characterization Phase läuft typischerweise derart ab, dass ein fahrzeugseitiger Sender auf 1.150 Trägern (Frequenzkanälen) zwischen 1,8 und 30 MHz sendet, wobei die Sendestärke festeingestellt ist und in einem Kalibrationsschritt am Bandende des Kraftfahrzeugs eingestellt wurde. Diese Träger werden der Reihe nach vom Signalpegel auf der Seite der Ladesäule erfasst und als Messwerte an das Kraftfahrzeug zurückgesendet. Dabei kann auch vorgesehen sein, dass die Ladesäule bereits Messwerte zusammenfasst (z.B. zwei Träger), sodass nicht 1.150 Messwerte, sondern beispielsweise nur 575 Messwerte zurückübertragen werden müssen.

Dabei müssen die Empfangsleistungen an der Ladesäule einen bestimmten Pegel überschreiten, ansonsten wird die Kommunikation beendet.

Hierzu wird typischerweise ein Mittelwert für die einzelnen PSD-Werte (Power Spectral Density) ermittelt und mit einem Schwellwert verglichen.

Insbesondere bei unsachgemäßer Installation der Ladesäule kann es dazu kommen, dass die Dämpfungen zu groß sind, sodass die Ladesäule nicht benutzt werden kann.

Der Erfindung liegt das technische Problem zugrunde, eine verbesserte Einrichtung zur Kommunikation eines Elektro- oder Hybridfahrzeugs mit einer elektrischen Ladesäule zu schaffen sowie ein entsprechendes Kommunikationsverfahren zur Verfügung zu stellen.

Die Lösung des technischen Problems ergibt sich durch eine Einrichtung mit den Merkmalen des Anspruchs 1 sowie ein Verfahren mit den Merkmalen des Anspruchs 9. Weitere vorteilhafte Ausgestaltungen der Erfindung ergeben sich aus den Unteransprüchen.

Die Einrichtung zur Kommunikation eines Elektro- oder Hybridfahrzeugs mit einer elektrischen Ladesäule über mindestens eine Datenleitung weist mindestens einen Sender und mindestens einen Empfänger auf. Der Sender ist derart ausgebildet, auf n Frequenzkanälen mit einer definierten Sendeleistung zu senden, wobei n vorzugsweise größer 1.000 ist und vorzugsweise 1.150 ist. Der mindestens eine Empfänger ist derart ausgebildet, Empfangsleistungen der Ladesäule für die n Frequenzkanäle zu empfangen, die die Ladesäule an das Kraftfahrzeug zurücksendet. Weiter weist die Einrichtung eine Steuereinheit auf, die derart ausgebildet ist, in Abhängigkeit der empfangenen Empfangsleistungen eine Kommunikation mit der Ladesäule fortzusetzen oder abzubrechen. Weiter ist der Sender derart ausgebildet, die Sendeleistung für die n Frequenzkanäle erhöhen zu können, wobei die Steuereinheit weiter derart ausgebildet ist, dass, wenn die Empfangsleistungen einen ersten Schwellwert unterschreiten, die Sendeleistung des Senders für die n Frequenzkanäle erhöht wird und der Sender erneut auf allen n Frequenzkanälen sendet und der Empfänger erneut die Empfangsleistungen der Ladesäule empfängt. Dabei sei angemerkt, dass es vorgesehen sein kann, dass nicht die Sendeleistung aller n Frequenzkanäle erhöht wird, sondern nur der Frequenzkanäle mit einer geringen Empfangsleistung. Vorzugsweise wird jedoch die Sendeleistung aller n Frequenzkanäle angehoben. Durch die Erhöhung der Sendeleistung wird die Wahrscheinlichkeit erhöht, doch noch einen Ladevorgang durchführen zu können.

Dabei kann zusätzlich vorgesehen sein, dass die Ladesäule bei der erneuten Sendung der Empfangsleistungen selbst seine Sendestärke ebenfalls erhöht, um so trotz der vorhandenen Dämpfung sicherzustellen, dass die Steuereinheit die gesendeten Empfangsleistungen sicher empfängt. Vorzugsweise ist die Erhöhung der Sendeleistung auf einen Maximalwert beschränkt. Dabei kann vorgesehen sein, dass stets bei dem erneuten Senden mit der maximal zulässigen Sendeleistung gesendet wird. Alternativ kann auch vorgesehen sein, dass abhängig von den Empfangsleistungen an der Ladesäule die Ladesäule die Sendeleistung anpasst. Spätestens nach Beendigung eines Ladevorganges stellt die Ladesäule dann wieder eine Standard-Sendeleistung ein.

In einer Ausführungsform ist die Einrichtung derart ausgebildet, die Kommunikation abzubrechen, wenn die empfangenen Empfangsleistungen trotz erhöhter Sendeleistung weiter unter dem ersten Schwellwert liegen, d.h. es wird nur einmal die Sendeleistung erhöht.

In einer weiteren Ausführungsform ist die Steuereinheit derart ausgebildet, die Sendeleistung um einen Wert zu erhöhen, der dem Unterschreiten des ersten Schwellwerts entspricht. Der Wert weist dabei vorzugsweise einen Sicherheitsabstand auf, beispielsweise ist dieser um einen bestimmten Absolutwert oder einen prozentualen Aufschlag (z.B. 5 % oder 10 %) größer als die Abweichung zum ersten Schwellwert. Es wird also nicht mit der maximal möglichen Sendeleistung gesendet, sondern nur mit angepasster Sendeleistung aufgrund der tatsächlichen Dämpfung. Dies ist insbesondere unter EMV-Betrachtungen vorteilhaft, da ansonsten gegebenenfalls die Kommunikation anderer Fahrzeuge gestört wird.

In einer weiteren Ausführungsform ist die Steuereinheit derart ausgebildet, aus den empfangenen Empfangsleistungen einen Mittelwert zu bilden, wobei der Mittelwert mit dem ersten Schwellwert verglichen wird. Dies vereinfacht die Auswertung gegenüber einer Einzelauswertung über die n Frequenzkanäle bzw. Gruppen von Frequenzkanälen (z.B. die paarweise Zusammenfassung in der Ladesäule).

In einer Ausführungsform ist die Steuereinheit derart ausgebildet, die Kommunikation sofort abzubrechen, wenn die empfangenen Empfangsleistungen auch einen zweiten Schwellwert unterschreiten, wobei der zweite Schwellwert kleiner als der erste Schwellwert ist. Hierdurch wird verhindert, dass bei einer extremen Dämpfung mit sehr hohen Sendeleistungen doch noch versucht wird, eine Kommunikation aufzunehmen, was zu den schon beschriebenen EMV-Problemen führen könnte.

In einer weiteren Ausführungsform ist die Einrichtung derart ausgebildet, dass die Sendeleistung für jeden Frequenzkanal oder Gruppen von Frequenzkanälen einzeln eingestellt wird.

In einer alternativen Ausführungsform ist die Einrichtung derart ausgebildet, dass die Sendeleistung für alle n Frequenzkanäle durch einen einzigen Verstärkungswert eingestellt wird.

In einer weiteren Ausführungsform ist die Einrichtung derart ausgebildet, dass nach Beendigung eines Ladevorgangs die Sendeleistung wieder auf die definierte Sendeleistung eingestellt wird.

Das Kommunikationsverfahren zwischen einem Elektro- oder Hybridfahrzeug und einer elektrischen Ladesäule erfolgt über mindestens eine Datenleitung, wobei das Elektro- oder Hybridfahrzeug eine Einrichtung mit mindestens einem Sender und mindestens einem Empfänger aufweist. Der mindestens eine Sender sendet auf n Frequenzkanälen nacheinander mit einer definierten Sendeleistung. Die Ladesäule weist ebenfalls mindestens einen Sender und mindestens einen Empfänger auf. Die Ladesäule empfängt die gesendeten n Nachrichten und ermittelt deren jeweilige Empfangsleistung, die dann die Ladesäule wieder zurücksendet, wobei dabei auch Empfangsleistungen von beispielsweise zwei Frequenzkanälen zusammengefasst werden können. Der Empfänger der Einrichtung empfängt dann die übermittelten Empfangsleistungen der Ladesäule und übermittelt diese an eine Steuereinheit, wobei die Steuereinheit in Abhängigkeit der empfangenen Empfangsleistungen der Ladesäule eine Kommunikation mit der Ladesäule fortsetzt oder abbricht. Dabei erhöht die Steuereinheit die Sendeleistung des Senders für die n Frequenzkanäle, wenn die empfangenen Empfangsleistungen unter einem ersten Schwellwert liegen, wobei dann der Sender erneut auf den n Frequenzkanälen an die Ladesäule sendet und der Empfänger die Empfangsleistungen der Ladesäule wieder empfängt. Hinsichtlich der weiteren Ausgestaltungen des Verfahrens wird auf die vorangegangenen Ausführungen zur Einrichtung Bezug genommen.

Die Erfindung wird nachfolgend anhand eines bevorzugten Ausführungsbeispiels näher erläutert. Die einzige Figur zeigt ein schematisches Blockschaltbild einer Einrichtung eines Elektro- oder Hybridfahrzeugs zur Kommunikation mit einer elektrischen Ladesäule.

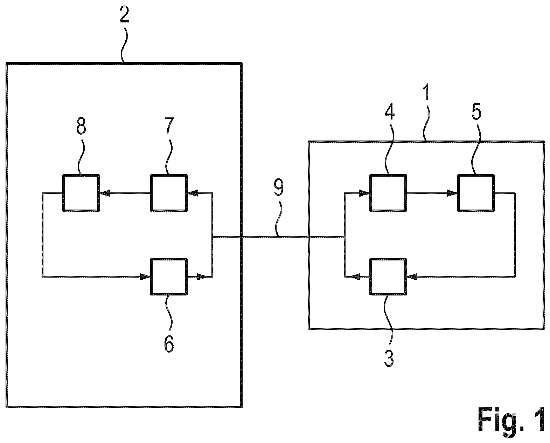

In der Fig. 1 ist eine Einrichtung 1 zur Kommunikation eines Elektro- oder Hybridfahrzeugs mit einer elektrischen Ladesäule 2 dargestellt. Die Einrichtung 1 weist mindestens einen Sender 2, mindestens einen Empfänger 4 und eine Steuereinheit 5 auf. Analog weist die Ladesäule 2 mindestens einen Sender 6, mindestens einen Empfänger 7 und eine Steuereinheit 8 auf. Die Einrichtung 1 und die Ladesäule 2 sind über eine Datenleitung 9 eines Ladekabels miteinander datentechnisch verbunden, wobei die Datenleitung 9 beispielsweise die Pilot-Leitung ist. Die weiteren Leitungen des Ladekabels sind nicht dargestellt. Die Steuereinheit 5 steuert den Sender 3 derart an, dass dieser auf n Frequenzkanälen mit einer definierten Sendeleistung nacheinander sendet. Vorzugsweise ist n = 1.150, wobei die Frequenzkanäle zwischen 1,8 - 30 MHz liegen. Der Empfänger 7 der Ladesäule 2 empfängt diese n Nachrichten und übermittelt diese mit den jeweiligen Empfangsleistungen an die Steuereinheit 8, die dann die empfangenen Empfangsleistungen über den Sender 6 an die Einrichtung 1 zurücksendet, wobei hier auch schon einzelne Frequenzkanäle zusammengefasst sein können. Die Empfangsleistungen werden dann von dem Empfänger 4 empfangen und an die Steuereinheit 5 übertragen. Die Steuereinheit 5 ermittelt dann aus den Empfangsleistungen eine mittlere spektrale Leistungsdichte und vergleicht diese mit einem ersten Schwellwert. Liegt die mittlere spektrale Leistungsdichte über dem ersten Schwellwert, so wird die Kommunikation fortgesetzt. Dabei kann auch vorgesehen sein, dass die Ermittlung der mittleren spektralen Leistungsdichte vollständig in der Ladesäule 2 erfolgt, sodass diese nur die mittlere spektrale Leistungsdichte an die Einrichtung 1 übermittelt.

Liegt die ermittelte mittlere spektrale Leistungsdichte hingegen unter dem ersten Schwellwert, aber über einem zweiten Schwellwert, so wird die Sendeleistung für die n Frequenzkanäle erhöht. Vorzugsweise wird dabei die Sendeleistung nur so stark erhöht, wie die Empfangsleistung unter dem ersten Schwellwert ist. War die Empfangsleistung z.B. 10 dBm/Hz unter dem ersten Schwellwert, so wird die Sendeleistung entsprechend um 10 dBm/Hz erhöht, wobei vorzugsweise ein gewisser Sicherheitsabstand auf die Erhöhung angewendet wird. Dabei kann die Erhöhung mit einem Wert erhöht werden, in dem ein Verstärkerwert AFC Gain angehoben wird. Alternativ wird die Sendestärke jedes Frequenzkanals einzeln um den ermittelten Wert erhöht. Anschließend wird dann das Verfahren wiederholt, d.h. die Einrichtung 1 sendet mit der erhöhten Sendeleistung auf allen n Frequenzkanälen und empfängt die Empfangsleistungen an der Ladesäule 2, die die Ladesäule 2 zurücksendet. Ist dann die mittlere spektrale Leistungsdichte über dem ersten Schwellwert, so wird die Kommunikation fortgesetzt. Ist diese hingegen erneut unter dem ersten Schwellwert, so wird die Kommunikation abgebrochen. Ebenso wird das Kommunikationsverfahren sofort abgebrochen, wenn die mittlere spektrale Leistungsdichte der Empfangssignale kleiner als der zweite Schwellwert ist (z.B. 40 dBm/Hz unter dem ersten Schwellwert).

Durch die Anpassung der Sendeleistung im Betrieb kann die Verfügbarkeit von Ladesäulen 2 bei Kommunikationsproblemen erhöht werden.

### Bezugszeichenliste

- 1: Einrichtung
- 2: Ladesäule
- 3: Sender
- 4: Empfänger
- 5: Steuereinheit
- 6: Sender
- 7: Empfänger
- 8: Steuereinheit
- 9: Datenleitung

## Patentansprüche

1. Einrichtung (1) zur Kommunikation eines Elektro- oder Hybridfahrzeugs mit einer elektrischen Ladesäule (2) über mindestens eine Datenleitung (9), wobei die Einrichtung mindestens einen Sender (3) und mindestens einen Empfänger (4) aufweist, wobei der Sender (3) derart ausgebildet ist, auf n Frequenzkanälen mit einer definierten Sendeleistung zu senden, wobei der Empfänger (4) derart ausgebildet ist, Empfangsleistungen der Ladesäule (2) für die n Frequenzkanäle zu empfangen, wobei die Einrichtung eine Steuereinheit (5) aufweist, wobei die Steuereinheit (5) derart ausgebildet ist, in Abhängigkeit der empfangenen Empfangsleistungen eine Kommunikation mit der Ladesäule (2) fortzusetzen oder abzubrechen,
**dadurch gekennzeichnet, dass**
der Sender (3) derart ausgebildet ist, die Sendeleistung für die n Frequenzkanäle erhöhen zu können, wobei die Steuereinheit (5) derart ausgebildet ist, dass, wenn die Empfangsleistungen einen ersten Schwellwert unterschreiten, die Sendeleistung des Senders (3) für die n Frequenzkanäle erhöht wird und der Sender (3) erneut auf allen n Frequenzkanälen sendet und der Empfänger (4) erneut die Empfangsleistungen der Ladesäule (2) empfängt.

2. Einrichtung nach Anspruch 1, **dadurch gekennzeichnet, dass** die Einrichtung (1) derart ausgebildet ist, die Kommunikation abzubrechen, wenn die empfangenen Empfangsleistungen trotz erhöhter Sendeleistung weiter unter dem ersten Schwellwert liegen.

3. Einrichtung nach Anspruch 1 oder 2, **dadurch gekennzeichnet, dass** die Steuereinheit (5) derart ausgebildet ist, die Sendeleistung um einen Wert zu erhöhen, der dem Unterschreiten des ersten Schwellwertes entspricht.

4. Einrichtung nach einem der vorangegangenen Ansprüche, **dadurch gekennzeichnet, dass** die Steuereinheit (5) derart ausgebildet ist, aus den empfangenen Empfangsleistungen einen Mittelwert zu bilden, wobei der Mittelwert mit dem ersten Schwellwert verglichen wird.

5. Einrichtung nach einem der vorangegangenen Ansprüche, **dadurch gekennzeichnet, dass** die Steuereinheit (5) derart ausgebildet ist, die Kommunikation sofort abzubrechen, wenn die empfangenen Empfangsleistungen auch einen zweiten Schwellwert unterschreiten, wobei der zweite Schwellwert kleiner als der erste Schwellwert ist.

6. Einrichtung nach einem der vorangegangenen Ansprüche, **dadurch gekennzeichnet, dass** die Einrichtung (1) derart ausgebildet ist, dass die Sendeleistung für jeden Frequenzkanal oder Gruppen von Frequenzkanälen einzeln eingestellt wird.

7. Einrichtung nach einem der Ansprüche 1 bis 5, **dadurch gekennzeichnet, dass** die Einrichtung (1) derart ausgebildet ist, dass die Sendeleistung für alle Frequenzkanäle durch einen einzigen Verstärkungswert eingestellt wird.

8. Einrichtung nach einem der vorangegangenen Ansprüche, **dadurch gekennzeichnet, dass** die Einrichtung derart ausgebildet ist, nach Beendigung eines Ladevorgangs die Sendeleistung wieder auf die definierte Sendeleistung einzustellen.

9. Kommunikationsverfahren zwischen einem Elektro- oder Hybridfahrzeug und einer elektrischen Ladesäule (2) über mindestens eine Datenleitung (9), wobei das Elektro- oder Hybridfahrzeug eine Einrichtung (1) mit mindestens einem Sender (3) und mindestens einem Empfänger (4) aufweist, wobei der Sender (3) auf n Frequenzkanälen nacheinander mit einer definierten Sendeleistung sendet, wobei der Empfänger (4) Empfangsleistungen der Ladesäule (2) für n Frequenzkanäle empfängt, die die Ladesäule (2) an den Empfänger (4) sendet, wobei eine Steuereinheit (5) der Einrichtung (1) in Abhängigkeit der empfangenen Empfangsleistungen eine Kommunikation mit der Ladesäule (2) fortsetzt oder abbricht,
**dadurch gekennzeichnet, dass**
die Steuereinheit (5) die Sendeleistung des Senders (3) für die n Frequenzkanäle erhöht, wenn die empfangenen Empfangsleistungen unter einem ersten Schwellwert liegen, wobei dann der Sender (3) erneut auf den n Frequenzkanälen an die Ladesäule (2) sendet und der Empfänger (4) die Empfangsleistungen der Ladesäule (2) wieder empfängt.

10. Verfahren nach Anspruch 9, **dadurch gekennzeichnet, dass** die Einrichtung (1) die Kommunikation abbricht, wenn die empfangenen Empfangsleistungen trotz erhöhter Sendeleistung weiter unter dem ersten Schwellwert liegen.
